# EUROPÄISCHE PATENTSCHRIFT

(11) **EP 1 482 185 B1**
(45) Veröffentlichungstag und Bekanntmachung des Hinweises auf die Patenterteilung: **28.07.2010**
(21) Anmeldenummer: 04009646.3
(22) Anmeldetag: 23.04.2004
(51) Int. Cl.: F16B 5/06

(54) **Befestigungsvorrichtung**
Fastening structure
Dispositif de fixation

(30) Priorität: 24.05.2003 DE 20308129 U
(43) Veröffentlichungstag der Anmeldung: 01.12.2004
(73) Patentinhaber: MABEG Leitsysteme GmbH, 59494 Soest (DE)
(72) Erfinder: Beissner Uwe, 59519 Möhnesee (DE)
(74) Vertreter: Meinke, Dabringhaus und Partner GbR

(56) Entgegenhaltungen:
- EP-A- 0 882 616
- EP-A- 1 068 820
- DE-A- 10 002 075
- DE-U- 20 102 332
- DE-U- 29 607 236
- FR-A- 2 774 437

## Beschreibung

Die Erfindung betrifft eine Befestigungsvorrichtung zur Befestigung von Bauteilen, Installationsteilen, Informationselementen und dgl.

Es sind Befestigungsvorrichtungen für die unterschiedlichsten Anwendungen in unterschiedlichsten Ausführungsformen bekannt. Diese sind jedoch sowohl hinsichtlich ihrer Befestigungsmöglichkeiten, wie auch hinsichtlich ihrer Belastungsfähigkeit wenig flexibel. Für verschiedene Anforderungen werden unterschiedliche Befestigungsvorrichtungen eingesetzt, müssen zusätzliche Installationsteile oder Informationselemente befestigt werden, wird regelmäßig auch eine neue Befestigungsvorrichtung benötigt.

Aus der DE 201 02 332 U ist bereits ein Profilstab zur Befestigung eines flächigen Elementes, insbesondere einer Platte oder eines gitterförmigen Zaunes, mit wenigstens einer, an insbesondere einer der Längsseiten des Profilstabes ausgebildeten U-förmigen Aufnahme für das flächige Element bekannt, bei dem wenigstens einer der Schenkel der U-förmigen Aufnahme wenigstens eine, vorzugsweise mehrere Längsnuten zur Aufnahme eines Verriegelungselementes aufweist. Es handelt sich dabei um einen Profilstab zur Befestigung und insbesondere zur Herstellung von Schutzgitterzäunen, welcher eine besonders stabile Befestigung des flächigen Zaunelementes an dem Profilstab ermöglicht. Dabei wird das flächige Element in die U-förmige Aufnahme vorzugsweise möglichst tief eingeschoben. Anschließend wird ein Verriegelungselement in eine oder mehrere der Längsnuten eingeführt, eingeschoben oder eingedreht und schafft damit eine formschlüssige Verbindung zwischen dem Profilstab und dem flächigen Element. Zur Demontage muss das Verriegelungselement wieder aus der Längsnut entfernt werden. Die kreis- oder wabenförmige Ausbildung des Profils bedingt den Einsatz von Standardbauteilen, wie beispielsweise Standardstäben und Standardgewindestangen. Die Befestigung entspricht der eines Kerbstiftes. Es werden unterschiedliche Materialien miteinander verbunden, und zwar ein Aluminiumstrangpressprofil als Zaunpfosten und ein Standardstahlzaun mit einem Befestigungselement. Zur Befestigung ist stets ein Werkzeug erforderlich. Dies ist ungünstig, und kann insbesondere nicht ohne weiteres für Innenausbauzwecke in Gebäuden übernommen werden. Vielmehr dient diese Lösung zur besonders stabilen Befestigung von flächigen zaunelementen an Profilstäben im Freien. Es wird ein zusätzliches Verriegelungselement benötigt, das eine Verbindung zwischen wenigstens einer der Längsnuten des Profilstabs und dem flächigenen Element schafft. Durch dieses Verriegelungselement wird das flächige Element formschlüssig mit dem Profilstab verriegelt.

Aufgabe der Erfindung ist es daher, eine Lösung zu schaffen, mit der ohne Zurhilfenahme weiteren Werkzeuges und ohne

Verwendung eines besonderen verriegelungselementes unterschiedlichste Bau- und Installationsteile, Informationselemente und dgl. in ein Bauwerk eingefügt werden können, ohne die gesamte Befestigungsvorrichtung austauschen oder neu erstellen zu müssen.

Diese Aufgabe wird gemäß der Erfindung dadurch gelöst, dass ein erstes, in beispielsweise eine Trennwand flächenbündig, etwa in die Fuge zwischen Türrahmen und Trennwand einfügbares Strangpressprofil mit zwei zu seiner Mittelachse spiegelbildlich ausgebildeten Aufnahmenuten zum Eingriff eines zweiten Profils, und ein zweites, querschnittlich im Wesentlichen n-förmiges Abdeck- und Befestigungsprofil mit zwei Profilschenkeln zum Rasteingeriff in das erste Strangpressprofil vorgesehen ist.

Ein derartiges, erfindungsgemäßes erstes Strangpressprofil kann regelmäßig standardmäßig bereits bei der Errichtung eines Baukörpers bzw. beim Innenausbau durch Errichten von Trennwänden und dgl. eingesetzt werden.

Beispielsweise kann ein solches Profil regelmäßig in Trennwandbereichen neben Türaussparungen vorgesehen sein. Damit wird bei einem späteren weiteren Innenausbau die Möglichkeit geschaffen, in Abhängigkeit von den konkreten Nutzungserfordernissen beispielsweise Elektroinstallationen, wie Steckdosen, Lichtschalter, Raumsteuermodule und dgl. zu montieren.

In demselben Strangpressprofil können auch gleichzeitig Informationselemente, wie etwa Raum- und Türschilder angebracht werden.

Weder bei der Erstmontage, noch bei einem späteren Austausch bzw. sich als notwendig erweisenden Ergänzungen, müssen irgendwelche baulichen Veränderungen vorgenommen werden. Insbesondere ist es nicht notwendig, Bohrungen in den Raum- und Trennwänden vorzunehmen, Montagedosen für Steckdosen oder sonstige Elektrobauteile herzustellen usw. Vielmehr erfolgt eine einfache und saubere sowie schnelle Montage ausschließlich über das bereits bauseitig bereitgestellte, erfindungsgemäße Strangpressprofil.

Ein zweites, querschnittlich im wesentlichen π-förmiges Abdeck- oder Befestigungsprofil ist mit zwei Profilschenkeln zum Rasteingriff in das erste Strangpressprofil ausgerüstet.

In Ausgestaltung ist vorgesehen, dass die Aufnahmenuten des ersten Strangpressprofils stiefelförmig ausgebildet sind und sich einerseits doppelkurvenförmig, andererseits bogenförmig zum Profilfuß hin erweitern, und in zwei voneinander durch Stege getrennte Profilfußbereiche auslaufen. Ein solches Profil kann im Extrusionsverfahren als fortlaufendes Profil bei größtmöglicher Festigkeit und gleichzeitiger Materialeinsparung kostengünstig und fortlaufend produziert werden und bietet im Zusammenwirken mit dem zweiten Profil mit korrespondierend zu den Aufnahmenuten ausgebildeten Profilschenkeln eine besonders einfache und feste, gleichzeitig aber auch jederzeit ohne Einsatz von Werkzeugen wieder zu lösende Verbindungsmöglichkeit.

Hierzu sieht die Erfindung auch vor, dass das Profil einen teilellipsenförmigen Mittelsteg mit bogenförmigen, zu den Aufnahmenuten hin gerichteten konvexen Wölbungen aufweist.

Der teilellipsenförmige Mittelsteg des ersten Profils weist zweckmäßig am Stegfuß beidseitig Hinterschneidungen auf. Das erste Profil kann darüber hinaus reibungserhöhende Mittel, insbesondere eine Gummierung der Aufnahmenuten, aufweisen, um einen festen Sitz des zweiten Profils zu ermöglichen und ein Verrutschen und/oder Klappern zu vermeiden.

Zum Rasteingriff in das erste Strangpressprofil ist bei dem zweiten Abdeck- oder Befestigungsprofil ein in eine erste Aufnahmenut des ersten Profils eingreifender erster Profilschenkel im wesentlichen viertelkreisförmig ausgebildet und weist an seinem freien Ende eine querschnittlich im wesentlichen kreisförmige Nase auf.

Hingegen ist ein in die zweite Aufnahmenut des ersten Profils eingreifender zweiter Profilschenkel im wesentlichen bogenförmig und federnd ausgebildet, weist eine kleinere Rastnase auf und ist von dem ersten Profilschenkel um das größte Außenmaß des teilellipsenförmigen Mittelstegs des ersten Profils beabstandet angeordnet.

Vorteilhaft ist das erste Strangpressprofil rückseitig mit einem Kanal zur Aufnahme von Elektrokabeln und dgl. ausgerüstet. Um die Elektrokabel oder dgl. horizontal aus dem Kanal herausführen zu können, weist der Mittelsteg des ersten Strangpressprofils wenigstens bereichsweise Durchbrechungen auf. Er kann auch durchgehend geschlitzt sein.

Einstückig mit dem zweiten Befestigungsprofil kann ein Aufnahmeprofil für insbesondere genormte Elektrobauteile ausgebildet sein, wobei dieses Aufnahmeprofil einen eigenen Kabelkanal und seinerseits eine Befestigungsnut mit Hinterschneidungen zum Einclipsen von Bauteilen aufweisen kann.

Mit einer erfindungsgemäßen Befestigungsvorrichtung können Bauteile, Installationsteile, Informationselemente und dgl. dergestalt montiert werden, dass ein mit einem zweiten Befestigungsprofil ausgerüstetes Bauteil dergestalt in ein mit einem Bauwerk oder Bauteil fest verbundenes Strangpressprofil eingeführt wird, dass zunächst ein erster Profilschenkel des zweiten Profils in eine erste Aufnahmenut des ersten Profils eingesetzt und anschließend durch eine Drehbewegung des zweiten Profils der zweite Profilschenkel des zweiten Profils über den Mittelsteg des ersten Profils in die zweite Aufnahmenut des ersten Profils eingeführt und bis zum Anschlag geführt wird, wobei die Rastnase am freien Ende des zweiten Profilschenkels in die Hinterschneidung am Fuß des Mittelsteges des ersten Profils einrastet und der erste Profilschenkel mit der kreisförmigen Nase vollflächig am Profilfußbereich der ersten Aufnahmenut des ersten Profils zur Anlage kommt.

Auf diese Weise können damit beliebige Bau- und Installationsteile, Informationssschilder und dgl. in das bauseits bereitgestellte erste Stranpressprofil eingeclipst werden. Im Bedarfsfall kann - bei entsprechender federnder Ausgestaltung des zweiten Profilschenkels des zweiten Profils - durch eine umgekehrte Drehbewegung das Installations- oder Informationselement auch wieder entfernt oder - z.B. zu Reinigungszwecken - von der dahinterliegenden Trennwand oder dgl. weggeschwenkt werden.

Die Erfindung ist nachstehend anhand der Zeichnung näher erläutert. Diese zeigt in
- Fig. 1: einen Querschnitt durch ein erfindungsgemäßes erstes Strangpressprofil,
- Fig. 2: einen Querschnitt durch ein erfindungsgemäßes zwei- tes, im wesentlichen π-förmiges Abdeck- oder Befe- stigungsprofil,
- Fig. 3: ein Profil gemäß Fig. 2 im teilweisen Eingriff mit einem Profil gemäß Fig. 1,
- Fig. 4: ein Profil gemäß Fig. 2 im vollständigen Eingriff mit einem Strangpressprofil gemäß Fig. 1.

Ein allgemein mit 1 bezeichnetes Strangpressprofil weist zueinander spiegelbildlich ausgestaltete Aufnahmenuten 2, 3 und einen Mittelsteg 4 sowie einen rückwärtigen Kabelkanal 5 auf. Die Aufnahmenuten 2, 3 sind im wesentlichen stiefelförmig ausgebildet, und erweitern sich zum Profilfuß 6 hin dergestalt, dass sie in zwei voneinander durch Stege 2c, 3c getrennte Profilfußbereiche 2a und 2b und 3a und 3b auslaufen. Dabei ist die in den Profilfußbereich 2a, 3a auslaufende äußere Wandung 7 der Aufnahmenuten 2, 3 doppelkurvenförmig, die aus der Wandung 8 des Mittelsteges 4 gebildete innere Begrenzung der Aufnahmenuten 2, 3 bogenförmig ausgebildet. Der Mittelsteg 4 weist eine teilellipsenförmige Gestaltung auf und besitzt darüber hinaus am Stegfuß Hinterschneidungen 9a, 9b.

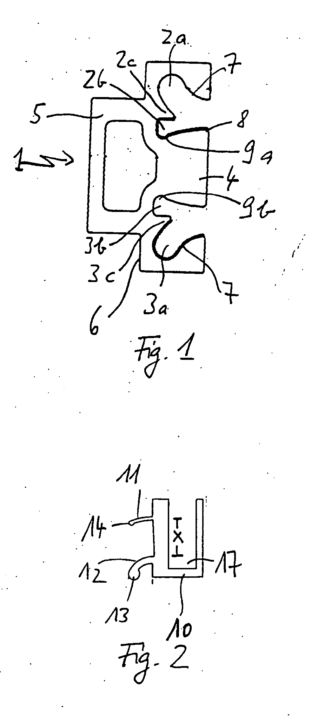

Fig. 2 zeigt ein zweites, querschnittlich im wesentlichen πförmiges Befestigungsprofil 10 mit zwei Profilschenkeln 11 und 12. Dabei ist der erste Profilschenkel 12 im wesentlichen viertelkreisförmig ausgebildet und weist an seinem freien Ende eine querschnittlich im wesentlichen kreisförmige Nase 13 auf. Der zweite Profilschenkel 11 ist im wesentlichen bogenförmig und federnd ausgebildet und weist eine kleinere Rastnase 14 auf. Die Profilschenkel 11 und 12 sind um dasselbe Maß x mit dem größten Außenmaß des teilellipsenförmigen Mittelstegs 4 voneinander beabstandet. Die Wirkungsweise der Befestigungsvorrichtung ist die folgende:

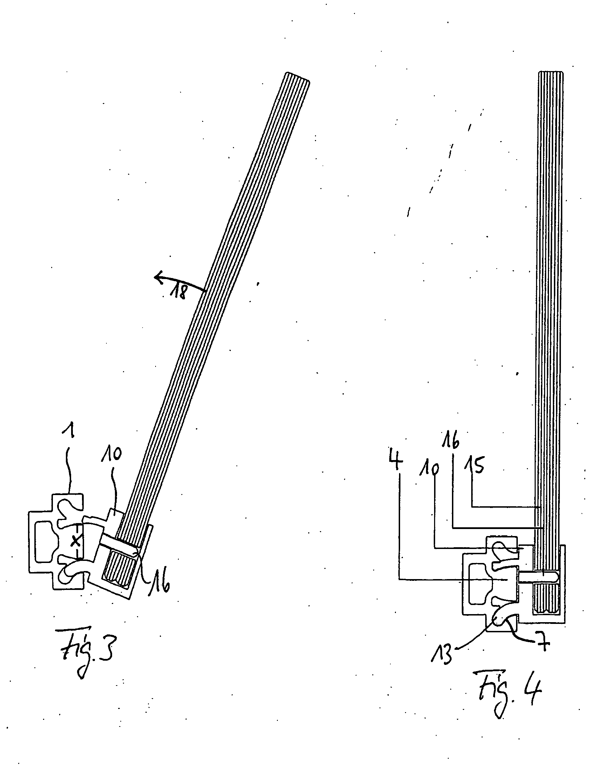

Zur Befestigung eines beispielsweise aus Glasscheiben 15 gebildeten Informationsschildes, die mit einer Madenschraube 16 im zweiten Profil 10 an einer Nut 17 fixiert sind, wird zunächst der mit einer kreisförmigen Nase 13 ausgerüstete zweite Befestigungsschenkel 12 in die Aufnahmenut 3 des ersten Strangpressprofils 1 eingeführt. Sodann wird das Informationsschild 15 mitsamt dem zweiten Befestigungsprofil 10 kreisbogenförmig, wie mit dem Pfeil 18 angedeutet, in Richtung des ersten Strangpressprofils in der Weise verschwenkt, dass der erste Profilschenkel 11 in die Aufnahmenut 2 eingreift. Hierbei federt der erste Profilschenkel 11 mit Rastnase 14 soweit zurück, dass er die Außenkontur des Mittelsteges 4 an der - zweckmäßig abgerundeten - Ecke umklammert. Sobald das Informationsschild 15 mit dem zweiten Profil 10 vollständig verschwenkt ist, so dass die in Fig. 4 dargestellte Endmontagestellung erreicht ist, hinterschnappt die Rastnase 14 des zweiten Profilschenkels 11 die am Fuß des Mittelstegs 4 im ersten Strangpressprofil 1 ausgebildete Hinterschneidung 9a. Gleichzeitig kommt die kreisförmige Nase 13 des ersten Profilschenkels 12 im Profilfußbereich 3a der Aufnahmenut vollständig mit der kurvenförmigen Außenwandung 7 und dem Zwischensteg 3c in Eingriff, so dass eine stabile Verbindung zwischen den beiden Profilen 1 und 10 geschaffen wird. Das als Schlitzschiene ausgebildete erste Strangpressprofil 1 kann in den Bereichen, in denen kein zweites Befestigungsprofil eingesetzt wird, mit einem ebenfalls mit zwei erfindungsgemäßen Befestigungsschenkeln 11, 12 ausgerüsteten, nicht näher dargestellten Abdeckprofil verschlossen werden. Dieses kann mittels eines einfachen, geeigneten Werkzeuges jederzeit wieder aufgehoben und die Aufnahmenuten 2, 3 damit wieder freigelegt werden.

Zum Lösen der Verbindung kann das Informationsschild 15 oder dgl. in umgekehrter Richtung mitsamt des zweiten Profils 10 aus dem ersten Strangpressprofil 1 herausgeschwenkt und entnommen werden, beispielsweise, um die Beschilderung zu ändern, oder zu Reinigungszwecken.

Statt eines Informationsschildes können auch Installations- oder andere Bauteile, wie etwa ein spezielles Aufnahmeprofil für genormte Elektrobauteile auf diese Weise einfach und kostengünstig sowie variabel montiert werden. In den Kabelkanal 5 können insbesondere Niedervoltkabel eingezogen werden, die durch geeignete, nicht näher dargestellte Durchbrüche in dem Mittelsteg 4 zugänglich gemacht werden können. Andere Kabel können innerhalb vorhandener Gebäudeteile, insbesondere Trennwände bereits vorinstalliert sein und durch zusätzliche Bohrungen durch das gesamte erste Strangpressprofil 1 nach außen gezogen und von dort zugänglich gemacht werden. Dabei kann die Kabelführung innerhalb des ohnehin vorhandenen Ständerwerks der Trennwand erfolgen. Auf diese Weise können auch andere technische Bauteile, wie z.B. LED-Anzeigen, Monitore, Kameras, Notfallmonitore, Kartenlesegeräte, Zugangskontrollgeräte und Raumsteuerungsmodule und dgl. angebunden werden.

Das Strangpressprofil 1 selbst wird zweckmäßig ebenfalls durch geeignete Verbindungsmittel an das Ständerwerk der Trennwand angebaut und ist bei Auf-Putz-Varianten flächenbündig als Schlitzschiene in die Wand integrierbar. Ebenso kann jedoch auch eine Wandanbauversion, ebenso wie eine Deckenan- oder einbauvariante verwirklicht werden. Schilder können plan oder im rechten Winkel zur Wand (Nasenschilder) befestigt werden.

Natürlich ist die Erfindung nicht auf die dargestellten

Ausführungsbeispiele beschränkt. Weitere Ausgestaltungen sind möglich, ohne den Grundgedanken zu verlassen. So kann ein erfindungsgemäßes Strangpressprofil 1 auch in eine freistehende Informations- und/oder Technikstele integriert werden bzw. selbst als Tragprofil für derartige Stelen dienen. Ebenso können hiermit Bodentanks, etwa zum Anschluss von IT- und/oder TK-Anlagen und zur Stromversorgung von Bürogeräten, gebildet werden. In diesem Fall können mehrere Profile gleichzeitig verwendet werden, die dann je nach Erfordernissen mittels unterschiedlicher Materialien außenseitig beplankt werden können.

## Patentansprüche

1. Befestigungsvorrichtung zur Befestigung von Bauteilen, Installationsteilen, Informationselementen und dgl.,
**gekennzeichnet durch**
ein erstes, insbesondere in eine Trennwand flächenbündig einsetzbares Strangpressprofil (1) mit zwei zu seiner Mittelachse spiegelbildlich ausgebildeten Aufnahmenuten (2, 3) zum Eingriff eines zweiten Profils (10) und ein zweites, querschnittlich im wesentlichen π-förmiges Abdeck- oder Befestigungsprofil (10) mit zwei Profilschenkeln (11, 12) zum Rasteingriff in das erste Strangpressprofil (1).

2. Befestigungsvorrichtung nach Anspruch 1,
**dadurch gekennzeichnet,**
**dass** die Aufnahmenuten (2, 3) stiefelförmig ausgebildet sind und sich einerseits doppelkurvenförmig (7), andererseits bogenförmig (8) zum Profilfuß (6) hin erweitern, und in zwei voneinander durch Stege (2c, 3c) getrennte Profilfußbereiche (2a, 2b, 3a, 3c) auslaufen.

3. Befestigungsvorrichtung nach Anspruch 1, 2,
**dadurch gekennzeichnet,**
**dass** das Profil (1) einen teilellipsenförmigen Mittelsteg (4) mit bogenförmigen, zu den Aufnahmenuten (2, 3) hin gerichteten konvexen Wölbungen aufweist.

4. Befestigungsvorrichtung nach Anspruch 1 und/oder wenigstens einem der folgenden
**dadurch gekennzeichnet,**
**dass** der teilellipsenförmige Mittelsteg (4) des ersten Profils (1) am Stegfuß beidseitig Hinterschneidungen (9a, 9b) aufweist.

5. Befestigungsvorrichtung nach Anspruch 1 und/oder wenigstens einem der folgenden,
**dadurch gekennzeichnet,**
**dass** die Aufnahmenuten (2, 3) reibungserhöhende Mittel, insbesondere eine Gummierung, aufweisen.

6. Befestigungsprofil nach Anspruch 5,
**dadurch gekennzeichnet,**
**dass** ein in eine erste Aufnahmenut (3) des ersten Profils (1) eingreifender erster Profilschenkel (12) im wesentlichen viertelkreisförmig ausgebildet ist und an seinem freien Ende eine querschnittlich im wesentlichen kreisförmige Nase (13) aufweist.

7. Befestigungsprofil nach Anspruch 1, 5,
**dadurch gekennzeichnet,**
**dass** ein in eine zweite Aufnahmenut (2) des ersten Profils (1) eingreifender zweiter Profilschenkel (11) im wesentlichen bogenförmig und federnd ausgebildet ist, eine Rastnase (14) aufweist und von dem ersten Profilschenkel (12) um das größte Außenmaß (X) des teilellipsenförmigen Mittelstegs (4) des ersten Profils (1) beabstandet angeordnet ist.

8. Befestigungsvorrichtung nach Anspruch 1 und/oder wenigstens einem der folgenden,
**dadurch gekennzeichnet,**
**dass** das erste Strangpressprofil (1) rückseitig einen Kanal (5) zur Aufnahme von Elektrokabeln und dgl. aufweist.

9. Befestigungsvorrichtung nach Anspruch 1 und/oder wenigstens einem der folgenden,
**dadurch gekennzeichnet,**
**dass** der Mittelsteg (4) des ersten Strangpressprofils (1) wenigstens bereichsweise Durchbrechungen und/oder Schlitze aufweist.

10. Befestigungsvorrichtung nach Anspruch 1 und/oder wenigstens einem der folgenden,
**gekennzeichnet durch**
ein einstückig mit dem zweiten Befestigungsprofil (10) ausgebildetes Aufnahmeprofil für zusätzliche Bauteile.

## Claims

1. A fixing device for fixing components, installation parts, information elements and the like,
**characterised by**
a first extrusion profile (1) which can be inserted in particular into a partitioning wall in surface-flush relationship and which has two receiving grooves (2, 3) formed in mirror image relationship with its central axis for the engagement of a second profile (10) and a second covering or fixing profile (10) which is substantially π-shaped in cross-section and which has two profile limbs (11, 12) for latching engagement into the first extrusion profile (1).

2. A fixing device according to claim 1 **characterised in that** the receiving grooves (2, 3) are boot-shaped and are enlarged on one side in a double curve shape (7) and on the other side in an arcuate shape (8) towards the profile base (6) and terminate in two profile base regions (2a, 2b, 3a, 3c) separated from each other by webs (2c, 3c).

3. A fixing device according to claim 1 or claim 2 **characterised in that** the profile (1) has a partially elliptical central web (4) with arcuate convex curvatures directed towards the receiving grooves (2, 3).

4. A fixing device according to claim 1 and/or at least one of the following claims **characterised in that** the partially elliptical central web (4) of the first profile (1) has undercut configurations (9a, 9b) at the web base at both sides.

5. A fixing device according to claim 1 and/or at least one of the following claims **characterised in that** the receiving grooves (2, 3) have friction-increasing means, in particular a rubber coating.

6. A fixing profile according to claim 5 **characterised in that** a first profile limb (12) engaging into a first receiving groove (3) of the first profile (1) is of a substantially quarter-circular configuration and at its free end has a nose (13) which is substantially circular in cross-section.

7. A fixing profile according to claim 1 and claim 5 **characterised in that** a second profile limb (11) engaging into a second receiving groove (3) of the first profile (1) is of a substantially arcuate and resilient configuration, has a latching nose (14) and is arranged spaced from the first profile limb (12) by the largest outside dimension (X) of the partially elliptical central web (4) of the first profile (1).

8. A fixing device according to claim 1 and/or at least one of the following claims **characterised in that** the first extrusion profile (1) on its rear side has a passage (5) for receiving electric cables and the like.

9. A fixing device according to claim 1 and/or at least one of the following claims **characterised in that** the central web (4) of the first extrusion profile (1) has at least region-wise through openings and/or slots.

10. A fixing device according to claim 1 and/or at least one of the following claims **characterised by** a receiving profile for additional components, which is provided integrally with the second fixing profile (10).

## Revendications

1. Dispositif de fixation pour la fixation de composants, de parties d'installations, d'éléments d'information et similaires,
**caractérisé par**
un premier profilé extrudé (1) susceptible d'être employé en particulier dans une cloison de séparation de façon à affleurer en surface, avec deux rainures de réception (2, 3) réalisées symétriquement par rapport à son axe médian pour l'engagement d'un deuxième profilé (10), et un deuxième profilé de fixation ou de recouvrement (10) présentant en section sensiblement une forme en π avec deux branches de profilé (11, 12) pour l'engagement par enclenchement dans le premier profilé extrudé (1).

2. Dispositif de fixation selon la revendication 1,
**caractérisé en ce que** les rainures de réception (2, 3) sont réalisées en forme de botte et s'élargissent d'une part en forme de double courbe (7), et d'autre part en forme d'arc (3) vers le pied de profilé (6), et se terminent en deux régions de pied de profilé (2a, 2b, 3a, 3c) séparées l'une de l'autre par des barrettes (2c, 3c).

3. Dispositif de fixation selon la revendication 1 ou 2,
**caractérisé en ce que** le profilé (1) comprend une barrette médiane (4) en forme d'ellipse partielle avec des bombements en forme d'arc, convexes dirigés vers les rainures de réception (2, 3)

4. Dispositif de revendications selon la revendication 1 et/ou selon l'une au moins des suivantes,
**caractérisé en ce que** la barrette médiane (4) en forme d'ellipse partielle du premier profilé (1) comprend des contre-dépouilles (9a, 9b) des deux côtés sur le pied de barrette.

5. Dispositif de fixation selon la revendication 1 et/ou selon l'une au moins des suivantes,
**caractérisé en ce que** les rainures de réception (2, 3) comprennent des moyens augmentant la friction, en particulier un revêtement caoutchouteux.

6. Profilé de fixation selon la revendication 5,
**caractérisé en ce qu'**une première branche (12) de profilé qui s'engage dans la première rainure de réception (3) du premier profilé (1) est réalisée sensiblement en forme de quart de cercle et comporte à son extrémité libre un ergot (13) à section de forme sensiblement circulaire.

7. Profilé de fixation selon la revendication 1 ou 5,
**caractérisé en ce qu'**une deuxième branche (11) de profilé qui s'engage dans la deuxième rainure de réception (2) du premier profilé est réalisée sensiblement en forme d'arc et avec effet ressort, comporte un ergot d'enclenchement (14) et est agencée en écartement de la première branche (12) de profilé à raison de la plus grande dimension extérieure (X) de la barrette médiane (4) en forme d'ellipse partielle du premier profilé (1).

8. Dispositif de fixation selon la revendication 1 et/ou selon l'une au moins des suivantes,
**caractérisé en ce que** le premier profilé extrudé (1) comporte du côté postérieur un canal (5) pour la réception de câbles électriques ou similaires.

9. Dispositif de fixation selon la revendication 1 et/ou selon l'une au moins des suivantes,
**caractérisé en ce que** la barrette médiane (4) du premier profilé extrudé (1) comporte au moins localement des traversées et/ou des fentes.

10. Dispositif de fixation selon la revendication 1 et/ou selon l'une au moins des suivantes,
**caractérisé par** un profilé récepteur, réalisé d'un seul tenant avec le deuxième profilé de fixation (10), pour des composants supplémentaires.
